# FASCICULE DE BREVET EUROPEEN

(11) **EP 1 685 318 B1**
(45) Date de publication et mention de la délivrance du brevet: **14.02.2007**
(21) Numéro de dépôt: 04791447.8
(22) Date de dépôt: 06.10.2004
(51) Int. Cl.: F02D 41/02, F02D 41/14, F02D 41/40

(54) **SYSTEME D'AIDE A LA REGENERATION DE MOYENS DE DEPOLLUTION D'UN MOTEUR DE VEHICULE AUTOMOBILE**
SYSTEM ZUR REGENERIERUNG EINES ABGASBEHANDLUNGSSYSTEMS EINES KRAFTFAHRZEUGS
ADDITIONAL SYSTEM FOR ASSISTING REGENERATION OF POLLUTION CONTROL MEANS OF A MOTOR VEHICLE

(30) Priorité: 07.11.2003 FR 0313164
(43) Date de publication de la demande: 02.08.2006
(73) Titulaire: Peugeot Citroën Automobiles S.A., 78140 Vélizy Villacoublay (FR)
(72) Inventeur: COLIGNON, Christophe, F-92300 Lavallois-Perret (FR)
(74) Mandataire: Habasque, Etienne J. Jean-François
(86) Numéro de dépôt international: PCT/FR2004/002445
(87) Numéro de publication internationale: WO 2005/054650

(56) Documents cités:
- FR-A- 2 804 168
- US-A- 5 050 376
- US-A1- 2003 056 498

## Description

La présente invention concerne un système d'aide à la régénération de moyens de dépollution intégrés dans une ligne d'échappement d'un moteur Diesel de véhicule automobile.

Plus particulièrement, l'invention se rapporte à un tel système dans lequel le moteur est associé à un turbocompresseur et à des moyens d'alimentation à rampe commune d'injection de carburant dans des cylindres du moteur, selon au moins une post-injection, et adaptés pour mettre en oeuvre, à iso-couple, au moins deux stratégies de régénération de premier et de second niveaux, selon des paramètres de contrôle de fonctionnement du moteur différents, afin d'obtenir des niveaux thermiques différents dans la ligne d'échappement, le niveau thermique correspondant à la stratégie de second niveau étant supérieur à celui correspond à la stratégie de premier niveau.

Lors de la régénération de moyens de dépollution, tel qu'un filtre à particules, un catalyseur d'oxydation après un empoisonnement par le soufre, un piège à NOx pour une désulfatation ou un piège à SOx, il est nécessaire d'élever fortement la température des gaz d'échappement du moteur afin d'obtenir une régénération rapide et ainsi minimiser la surconsommation de carburant associée à cette régénération.

Or, ceci nécessite d'augmenter très fortement la température dans la ligne d'échappement et par conséquent des éléments intégrés dans celle-ci.

Certaines stratégies reposent également sur l'utilisation de la conversion des hydrocarbures imbrûlés provenant de la combustion dans le moteur, par des moyens formant catalyseur, pour élever encore le niveau thermique dans la ligne d'échappement.

Cependant, des niveaux thermiques trop élevés peuvent conduire à la rupture par exemple de la portion de turbine du turbocompresseur.

Il est donc nécessaire de bien maîtriser les niveaux thermiques mis en oeuvre lors de la régénération.

le document US 200310056498 décrit un système d'aide à la régénération d'un filtre à particules dans la ligne d'échappement d'un moteur Diesel, dans lequel le moteur est associé à un turbocompresseur. Dans ce système, la température dans la ligne d'échappement est augmentée par une post-injection de carburant. Selon ce document, il est connu de commander la quantité de carburant post-injecté et le temps d'injection de sorte que les limites de température de la turbine du turbocompresseur soient respectées.

L'invention a pour objet un système d'aide à la régénération de moyens de dépollution intégrés dans une ligne d'échappement d'un moteur Diesel de véhicule automobile, dans lequel le moteur est associé à un turbocompresseur et à des moyens d'alimentation à rampe commune d'injection de carburant dans des cylindres du moteur, selon au moins une post-injection, et adaptés pour mettre en oeuvre, à iso-couple, au moins deux stratégies de régénération de premier et de second niveaux, selon des paramètres de contrôle du fonctionnement du moteur différents, afin d'obtenir des niveaux thermiques différents dans la ligne d'échappement, le niveau thermique correspondant à la stratégie de second niveau étant supérieur à celui correspondant à la stratégie de premier niveau, caractérisé en ce qu'il comporte des moyens d'acquisition du niveau thermique dans la ligne d'échappement, des moyens de comparaison de ce niveau thermique à une valeur de seuil de sécurité de la turbine du turbocompresseur, pour, en cas de dépassement de cette valeur de seuil, lors de l'application de la stratégie de second niveau, piloter les moyens d'alimentation afin de réguler progressivement au moins l'un des paramètres de contrôle du fonctionnement du moteur, de manière à réduire le niveau thermique dans la ligne d'échappement et si ce niveau thermique n'est pas redescendu en-dessous de la valeur de seuil au bout d'une première période de temps prédéterminée, piloter les moyens d'alimentation pour basculer vers la stratégie de premier niveau et si ce niveau thermique dans la ligne d'échappement n'est toujours pas redescendu en-dessous de la valeur de seuil de sécurité au bout d'une seconde période de temps, arrêter la stratégie de régénération.

Suivant d'autres caractéristiques :
- les moyens d'alimentation sont adaptés pour mettre en oeuvre deux post-injections successives ;
- lors de la régulation, les moyens d'alimentation sont adaptés pour réduire progressivement le débit en carburant de la seconde post-injection ;
- les moyens d'alimentation sont adaptés pour réduire le débit de la seconde post-injection en utilisant un facteur correctif compris entre 0 et 1 et déterminé à partir de l'écart entre le niveau thermique acquis dans la ligne d'échappement et la valeur de seuil de sécurité ;
- le facteur correctif est déterminé par un régulateur de type PI à gain non linéaire ;
- les moyens d'acquisition du niveau thermique comprennent au moins un capteur de température ;
- la valeur de seuil de sécurité est calibrable ;
- les moyens de dépollution comprennent un filtre à particules ;
- les moyens de dépollution comprennent un piège à NOx ;
- les moyens de dépollution comprennent un catalyseur d'oxydation ;
- les moyens de dépollution comprennent un piège à SOx ;
- le carburant comporte un additif destiné à se déposer avec les particules auxquelles il est mélangé, sur les moyens de dépollution pour faciliter leur régénération ; et
- le carburant comporte un additif formant piège à NOx.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide à la régénération selon l'invention ; et
- la Fig.2 illustre le fonctionnement de moyens de pilotage entrant dans la constitution d'un tel système d'aide à la régénération.

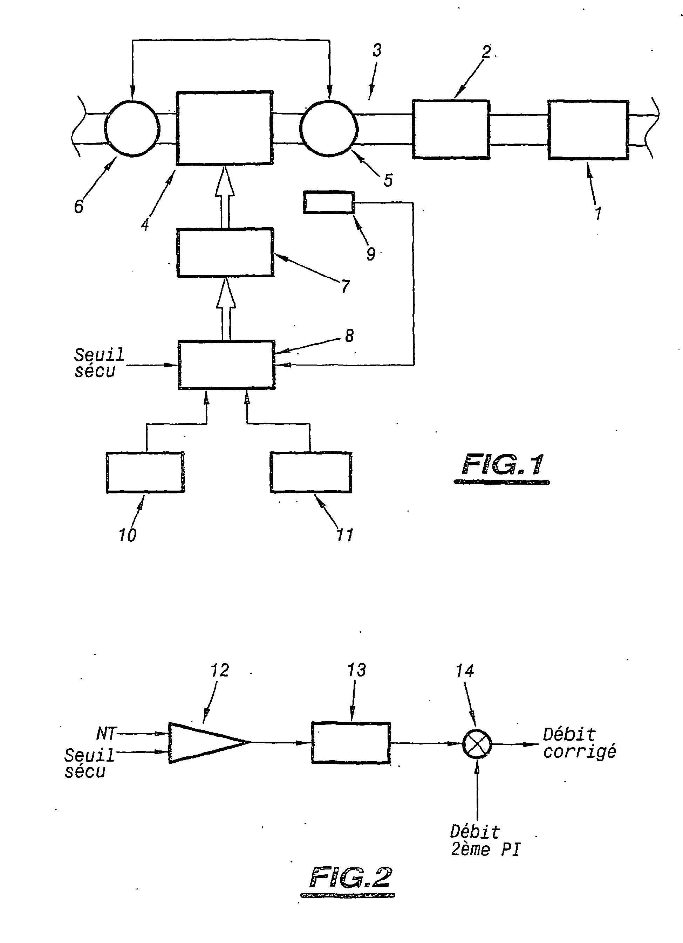

On a en effet illustré sur la figure 1, un système d'aide à la régénération de moyens de dépollution désignés par la référence générale 1, par exemple associés à des moyens formant catalyseur d'oxydation désignés par la référence générale 2, et intégrés dans une ligne d'échappement désignée par la référence générale 3, d'un moteur Diesel 4 de véhicule automobile.

Les moyens formant catalyseur sont placés en amont des moyens de dépollution.

Le moteur est associé à un turbocompresseur dont la portion de turbine 5 est disposée dans la ligne d'échappement et dont la portion de compresseur 6 est disposée en amont du moteur.

Les moyens de dépollution peuvent par exemple comporter un filtre à particules, un piège à NOx, un catalyseur d'oxydation, un piège à SOx, etc..

On notera également que de façon classique, le carburant peut comporter un additif destiné à se déposer avec les particules auxquelles il est mélangé, sur les moyens de dépollution pour faciliter leur régénération en abaissant la température de combustion des suies piégées dans ceux-ci.

De façon classique, cet additif est en effet présent dans les particules après combustion du carburant additivé dans le moteur.

Un additif formant piège à NOx peut également être envisagé.

Le moteur est également associé à des moyens d'alimentation à rampe commune d'injection de carburant dans des cylindres du moteur, selon au moins une post-injection.

Ces moyens sont désignés par la référence générale 7 sur cette figure et sont associés à des moyens de pilotage désignés par la référence générale 8, pour mettre en oeuvre, à iso-couple, au moins deux stratégies de régénération de premier et de second niveaux, selon des paramètres de contrôle de fonctionnement du moteur différents, afin d'obtenir des niveaux thermiques différents dans la ligne d'échappement, le niveau thermique correspondant à la stratégie de second niveau étant supérieur à celui correspondant à la stratégie de premier niveau.

Ceci se fait alors en modifiant les paramètres de contrôle de fonctionnement du moteur, tels que par exemple l'air d'admission, par régulation du papillon d'admission dans le moteur, par régulation de la pression de consigne du turbocompresseur ou par régulation de la quantité de carburant injectée dans le moteur, par exemple lors des post-injections, de façon classique.

On sait en effet que la régénération de tels moyens de dépollution peut se faire par utilisation d'injections multiples dans les cylindres du moteur, notamment pendant leurs phases de détente.

Afin de limiter le niveau thermique dans la ligne d'échappement lors de la régénération, les moyens de pilotage mettent en oeuvre en permanence un contrôle de la température dans celle-ci, pour adapter les caractéristiques des différentes injections (débit, début d'injection, etc...), afin de réduire le niveau thermique dans la ligne lorsqu'il est trop élevé.

En fait, ce système comporte des moyens d'acquisition du niveau thermique dans la ligne d'échappement, désignés par la référence générale 9 sur cette figure, des moyens de comparaison de ce niveau thermique à une valeur de seuil de sécurité de la turbine du turbocompresseur, formés par les moyens de pilotage 8, pour, en cas de dépassement de cette valeur de seuil lors de l'application de la stratégie de second niveau, désignée par la référence générale 10, piloter les moyens d'alimentation 7 afin de réguler progressivement au moins l'un des paramètres de contrôle du fonctionnement du moteur, de manière à réduire le niveau thermique dans la ligne d'échappement, et si ce niveau n'est pas redescendu en-dessous de la valeur de seuil au bout d'une première période de temps prédéterminée, piloter les moyens d'alimentation pour basculer vers la stratégie de premier niveau, désignée par la référence générale 11 et si ce niveau thermique dans la ligne d'échappement n'est toujours pas redescendu en-dessous de la valeur de seuil de sécurité au bout d'une seconde période de temps prédéterminée, arrêter la stratégie de régénération.

En fait, les moyens 9 d'acquisition du niveau thermique dans la ligne d'échappement peuvent comporter un capteur de température placé dans celle-ci, par exemple à proximité de la portion de turbine du turbocompresseur.

La régulation est illustrée sur la figure 2, où l'on peut constater qu'un comparateur désigné par la référence générale 12 reçoit en entrée, la valeur de seuil de sécurité seuil-sécu, de la turbine du turbocompresseur et le niveau thermique NT dans la ligne d'échappement acquis comme décrit précédemment.

La sortie de ce comparateur 12 est raccordée à un régulateur de type PI à gain non linéaire désigné par la référence générale 13, adapté pour délivrer une information de correction à un correcteur 14 pour réduire progressivement le débit en carburant d'une seconde post-injection dans le cas où les moyens d'alimentation 7 sont adaptés pour mettre en oeuvre deux post-injections successives.

On conçoit alors que dans ce cas, les moyens d'alimentation 7 sont adaptés pour réduire le débit de la seconde post-injection en utilisant un facteur correctif compris entre 0 et 1 et déterminé à partir de l'écart entre le niveau thermique dans la ligne d'échappement NT et la valeur de seuil de sécurité seuil-sécu.

Bien entendu, la valeur de seuil de sécurité peut être calibrable.

On conçoit alors que l'objectif de ce système est de limiter le niveau thermique dans la ligne d'échappement afin de préserver l'intégrité de la turbine du turbocompresseur.

Des pics de température excessive ne peuvent se produire que lorsque le système d'aide à la régénération fonctionne en niveau 2.

En comparant la température mesurée en instantané à un seuil, on détermine s'il y a dépassement d'une température critique ou non.

Ensuite, en fonction de l'écart par rapport au seuil, on modifie la stratégie d'aide à la régénération (débit et phasage des différentes injections) pour diminuer cette température tout en restant à iso-couple, par exemple en réduisant le débit de post-injection.

Dans l'exemple décrit, la stratégie de régénération utilise des injections multiples et notamment deux post-injections. La calibration peut alors être faite pour la deuxième post-injection.

La correction sur la quantité de carburant en post-injection est réalisée tant que le niveau thermique dans la ligne d'échappement reste au-dessus du seuil de sécurité. Si malgré la réduction des quantités injectées, le niveau thermique ne redescend pas en-dessous du seuil au bout d'une première période de temps, alors on force le système à basculer sur la stratégie de niveau 1.

Si, même après avoir basculé sur cette stratégie de niveau 1, le niveau thermique reste excessif pendant une période de temps prédéterminée, alors on coupe la régénération.

Ainsi, si le niveau thermique dans la ligne NT ligne, mesuré par la température dans la ligne, dépasse un seul calibrable T.max, alors le débit de la post-injection n°2 est progressivement réduit en le multipliant par un facteur correctif compris entre 0 et 1, Kturbine, donné par un régulateur de type Pl avec gain non linéaire en fonction de l'écart de température entre la valeur mesurée et la valeur de sécurité de la turbine.

Un compteur de temps tst est alors déclenché. Au bout d'un temps calibrable tsécuturbi., le système d'aide à la régénération est forcé en niveau 1 pendant un temps-minimum calibrable tniv1turb.. Si, au bout de ce temps tniv1turb, le niveau thermique n'est toujours pas redescendu en-dessous du seuil de sécurité T.max, alors la régénération est stoppée.

On conçoit alors qu'un tel système permet d'assurer la sécurité de fonctionnement de la turbine du turbocompresseur.

Bien entendu, d'autres modes de réalisation peuvent être envisagés.

Ainsi par exemple, les moyens de dépollution et les moyens formant catalyseur d'oxydation peuvent être intégrés dans un seul et même élément, notamment sur un même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

Enfin, les moyens de dépollution peuvent également comporter un catalyseur d'oxydation ou un piège à SOx.

## Revendications

1. Système d'aide à la régénération de moyens de dépollution (1) intégrés dans une ligne d'échappement (3) d'un moteur Diesel (4) de véhicule automobile, dans lequel le moteur est associé à un turbocompresseur (5,6) et à des moyens (7) d'alimentation à rampé commune d'injection de carburant dans des cylindres du moteur, selon au moins une post-injection, et adaptés pour mettre en oeuvre, à iso-couple, au moins deux stratégies de régénération de premier et de second niveaux (10,11), selon des paramètres de contrôle du fonctionnement du moteur différents, afin d'obtenir des niveaux thermiques différents dans la ligne d'échappement, le niveau thermique correspondant à la stratégie de second niveau (10) étant supérieur à celui correspondant à la stratégie de premier niveau (11), **caractérisé en ce qu'**il comporte des moyens (9) d'acquisition du niveau thermique dans la ligne d'échappement, des moyens (8) de comparaison de ce niveau thermique à une valeur de seuil de sécurité de la turbine (5) du turbocompresseur, pour, en cas de dépassement de cette valeur de seuil, lors de l'application de la stratégie de second niveau (10), piloter les moyens d'alimentation (7) afin de réguler progressivement au moins l'un des paramètres de contrôle du fonctionnement du moteur, de manière à réduire le niveau thermique dans la ligne d'échappement (3) et si ce niveau thermique n'est pas redescendu en-dessous de la valeur de seuil au bout d'une première période de temps prédéterminée, piloter les moyens d'alimentation (7) pour basculer vers la stratégie de premier niveau et si ce niveau thermique dans la ligne d'échappement n'est toujours pas redescendu en-dessous de la valeur de seuil de sécurité au bout d'une seconde période de temps, arrêter la stratégie de régénération.

2. Système selon la revendication 1, **caractérisé en ce que** les moyens d'alimentation (7) sont adaptés pour mettre en oeuvre deux post-injections successives.

3. Système selon la revendication 2, **caractérisé en ce que** lors de la régulation, les moyens d'alimentation (7) sont adaptés pour réduire progressivement le débit en carburant de la seconde post-injection.

4. Système selon la revendication 3, **caractérisé en ce que** les moyens d'alimentation (7) sont adaptés pour réduire le débit de la seconde post-injection en utilisant un facteur correctif compris entre 0 et 1 et déterminé à partir de l'écart entre le niveau thermique acquis dans la ligne d'échappement et la valeur de seuil de sécurité.

5. Système selon la revendication 4; **caractérisé en ce que** le facteur correctif est déterminé par un régulateur de type Pl à gain non linéaire (13).

6. Système selon l'une quelconque des revendications précédentes, **caractérisé en ce que** les moyens d'acquisition du niveau thermique comprennent au moins un capteur de température (9).

7. Système selon l'une quelconque des revendications précédentes, **caractérisé en ce que** la valeur de seuil de sécurité est calibrable.

8. Système selon l'une quelconque des revendications précédentes, **caractérisé en ce que** les moyens de dépollution (1) comprennent un filtre à particules.

9. Système selon l'une quelconque des revendications précédentes, **caractérisé en ce que** les moyens de dépollution (1) comprennent un piège à NOx.

10. Système selon l'une quelconque des revendications précédentes, **caractérisé en ce que** les moyens de dépollution (1) comprennent un piège à SOx.

11. Système selon l'une quelconque des revendications précédentes, **caractérisé en ce que** les moyens de dépollution (1) comprennent un catalyseur d'oxydation.

12. Système selon l'une quelconque des revendications précédentes, **caractérisé en ce que** le carburant comporte un additif destiné à déposer avec les particules auxquelles il est mélangé, sur les moyens de dépollution pour faciliter leur régénération.

13. Système selon l'une quelconque des revendications 1 à 11, **caractérisé en ce que** le carburant comporte un additif formant piège à NOx.

## Claims

1. System for assisting the regeneration of anti-pollution means (1) integrated into an exhaust line (3) of a motor vehicle diesel engine (4), in which the engine is associated with a turbocharger (5, 6) and with common rail feed means (7) for injecting fuel into cylinders of the engine, with at least one post-injection, and designed to implement, at constant torque, at least two first-level and second-level regeneration strategies (10, 11), depending on different engine operation control parameters, in order to obtain different heat levels in the exhaust line, the heat level corresponding to the second-level strategy (10) being higher than that corresponding to the first-level strategy (11), **characterized in that** it comprises means (9) for acquiring the heat level in the exhaust line, means (8) for comparing this heat level with a safety threshold value of the turbine (5) of the turbocharger in order, in the event of this threshold value being exceeded when applying the second-level strategy (10), to control the feed means (7) for the purpose of progressively regulating at least one of the engine operation control parameters so as to reduce the heat level in the exhaust line (3), and, if this heat level has not dropped back below the threshold value afte-r a predetermined first time period, to control the feed means (7) to switch over to the first-level strategy, and, if this heat level in the exhaust line has still not dropped back below the safety threshold value after a second time period, to stop the regeneration strategy.

2. System according to Claim 1, **characterized in that** the feed means (7) are designed to implement two successive post-injections.

3. System according to Claim 2, **characterized in that** during the regulation the feed means (7) are designed to progressively reduce the fuel delivery rate of the second post-injection.

4. System according to Claim 3, **characterized in that** the feed means (7) are designed to reduce the delivery rate of the second post-injection by using a corrective factor of between 0 and 1 determined from the difference between the heat level acquired in the exhaust line and the safety threshold value.

5. System according to Claim 4, **characterized in that** the corrective factor is determined by a PI-type regulator (13) having non-linear gain.

6. System according to any one of the preceding claims, **characterized in that** the heat level acquisition means comprise at least one temperature sensor (9) .

7. System according to any one of the preceding claims, **characterized in that** the safety threshold value can be calibrated.

8. System according to any one of the preceding claims, **characterized in that** the anti-pollution means (1) comprise a particulate filter.

9. System according to any one of the preceding claims, **characterized in that** the anti-pollution means (1) comprise an NOx trap.

10. System according to any one of the preceding claims, **characterized in that** the anti-pollution means (1) comprise an SOx trap.

11. System according to any one of the preceding claims, **characterized in that** the anti-pollution means (1) comprise an oxidation catalyst.

12. System according to any one of the preceding claims, **characterized in that** the fuel includes an additive intended to be deposited, together with the particles with which it is mixed, on the anti-pollution means in order to facilitate their regeneration.

13. System according to any one of Claims 1 to 11, **characterized in that** the fuel includes an additive forming an NOx trap.

## Patentansprüche

1. Zusatzsystem für die Regeneration von Reinigungsmitteln (1), die in eine Auspuffleitung (3) eines Dieselmotors (4) eines Kraftfahrzeugs integriert sind, wobei der Motor mit einem Turboverdichter (5, 6) und mit Mitteln (7) zur Zuführung mit gemeinsamer Druckleitung zur Einspritzung von Kraftstoff in Zylinder des Motors verknüpft ist, basierend auf wenigstens einer Nacheinspritzung, die derart ausgeführt sind, dass sie in Isokopplung wenigstens zwei Strategien zur Regeneration für das erste und das zweite Niveau (10, 11) ausführen, nach verschiedenen Parametern zur Funktionssteuerung des Motors, um in der Auspuffleitung verschiedene Temperatumiveaus zu erreichen, wobei das der Strategie für das zweite Niveau (10) entsprechende Temperaturniveau größer ist als jenes, das-der Strategie für das erste Niveau (11) entspricht, **dadurch gekennzeichnet, dass** es Mittel (9) zur Erfassung des Temperaturniveaus in der Auspuffleitung umfasst, Mittel (8) zum Vergleichen dieses Temperatumiveaus mit einem Sicherheitsschwellenwert für die Turbine (5) des Turboverdichters, um im Fall der Überschreitung dieses Schwellenwerts, bei der Anwendung der Strategie für das erste Niveau (10), die Mittel zur Zuführung (7) zu steuern, um so wenigstens einen der Parameter zur Funktionssteuerung des Motors stufenweise zu regeln, um das Temperaturniveau in der Auspuffleitung (3) zu reduzieren, und, wenn dieses Temperaturniveau am Ende einer ersten vorbestimmten Zeitdauer nicht wieder unter den Schwellenwert abgesunken ist, die Mittel zur Zuführung (7) derart zu regeln, dass sie zu der Strategie für das erste Niveau kippen, und, wenn das Temperaturniveau in der Auspuffleitung am Ende einer zweiten Zeitdauer noch immer nicht unter den Sicherheitsschwellenwert abgesunken ist, die Strategie zur Regeneration abzubrechen.

2. System nach Anspruch 1, **dadurch gekennzeichnet, dass** die Mittel zur Zuführung (7) derart ausgeführt sind, dass sie zwei aufeinander folgende Nacheinspritzungen ausführen.

3. System nach Anspruch 2, **dadurch gekennzeichnet, dass** bei der Regelung die Mittel zur Zuführung (7) derart ausgeführt sind, dass sie stufenweise die Kraftstoffmenge der zweiten Nacheinspritzung reduzieren.

4. System nach Anspruch 3, **dadurch gekennzeichnet, dass** die Mittel zur Zuführung (7) derart ausgeführt sind, dass sie die Menge der zweiten Nacheinspritzung unter Verwendung eines Korrekturfaktors, der zwischen 0 und 1 liegt und auf Basis der Differenz zwischen dem in der Auspuffleitung erfassten Temperaturniveau und dem Sicherheitsschwellenwert bestimmt wird, reduzieren.

5. System nach Anspruch 4, **dadurch gekennzeichnet, dass** der Korrekturfaktor durch einen Regler vom Typ PI mit nicht linearem Verstärkungsfaktor (13) bestimmt wird.

6. System nach einem der vorhergehenden Ansprüche, **dadurch gekennzeichnet, dass** die Mittel zur Erfassung des Temperaturniveaus wenigstens einen Temperaturfühler (9) umfassen.

7. System nach einem der vorhergehenden Ansprüche, **dadurch gekennzeichnet, dass** der Sicherheitsschwellenwert kalibrierbar ist.

8. System nach einem der vorhergehenden Ansprüche, **dadurch gekennzeichnet, dass** die Reinigungsmittel (1) einen Partikelfilter umfassen.

9. System nach einem der vorhergehenden Ansprüche, **dadurch gekennzeichnet, dass** die Reinigungsmittel (1) eine NOx-Falle umfassen.

10. System nach einem der vorhergehenden Ansprüche, **dadurch gekennzeichnet, dass** die Reinigungsmittel (1) eine SOx-Falle umfassen.

11. System nach einem der vorhergehenden Ansprüche, **dadurch gekennzeichnet, dass** die Reinigungsmittel (1) einen Oxidationskatalysator umfassen.

12. System nach einem der vorhergehenden Ansprüche, **dadurch gekennzeichnet, dass** der Kraftstoff ein Additiv umfasst, das dazu bestimmt ist, sich mit den Partikeln, mit denen es vermischt wird, auf den Reinigungsmitteln abzusetzen, um deren Regeneration zu erleichtern.

13. System nach einem der Ansprüche 1 bis 11, **dadurch gekennzeichnet, dass** der Kraftstoff ein Additiv umfasst, welches eine NOx-Falle bildet.
